# EUROPEAN PATENT SPECIFICATION

(11) **EP 0 416 655 B1**
(45) Date of publication and mention of the grant of the patent: **16.06.1993**
(21) Application number: 90117306.2
(22) Date of filing: 07.09.1990
(51) Int. Cl.: F02M 35/10

(54) **Intake manifold**
Einlassleitung
Tubulure d'admission

(30) Priority: 08.09.1989 JP 106026/89 U
(43) Date of publication of application: 13.03.1991
(60) Divisional application: 92111811.3
(73) Proprietor: SHOWA ALUMINUM CORPORATION, Sakai-shi Osaka (JP)
(72) Inventor: Ogawa, Seiichi, Oyama-shi, Tochigi (JP); Sukimoto, Minobu, Oyama-shi, Tochigi (JP); Akiyoshi, Hitoshi, Oyama-shi, Tochigi (JP)
(74) Representative: TER MEER STEINMEISTER & PARTNER GbR

(56) References cited:
- US-A- 2 845 911
- US-A- 4 741 295
- US-A- 4 829 944

## Description

The present invention relates to an intake manifold, for example, for use with motor vehicle engines, according to the preamble of claim 1. Document US-A-4 829 944 shows an intake manifold of this type.

The term "aluminum" as used herein and in the claims includes pure aluminum, commercial pure aluminum containing small amounts of impurities and aluminum alloys. The term "wrought aluminum" as used herein and in the claims refers to an article of aluminum prepared by plastic working. The term "center line average height" is used herein and in the claims according to the definition of JIS B0601-1982.

Conventional intake manifolds, for example, for use with motor vehicle gasoline engines equipped with an electronically controlled fuel injection system comprise a plenum and branch pipes and are entirely prepared by casting. With the cast intake manifold, however, it is impossible to reduce the wall thickness thereof below a certain limit owing to the flow characteristics of molten metal to be cast, so that the manifold has the problem of inceased weight. Further since the surface of the casting is rough and has voids, the casting must be finished to a smooth surface at least internally to decrease the air resistance for an improved intake efficiency. Thus, the manifold has the problem of necessitating a cumbersome finishing procedure. Moreover, since it is impossible to finish the entire inner surface of the manifold in view of its configuration, the air resistance still remains to be reduced to achieve a higher intake efficiency.

To solve this problem, we have already proposed the intake manifold disclosed in U.S. Patent No. 4,829,944.

For improved performance, some motor vehicle engines having intake ports and exhaust ports are recently so adapted that at least the intake ports provided are two in number for each cylinder, and these ports are each provided with a valve. In this case, each intake manifold has connected thereto one branch pipe of the intake manifold, so that the number of branch pipes required is twice the number of cylinders, hence a large number of branch pipes. Because the engine rooms of motor vehicles are limited in size, the intake manifold must be compacted, whereas the increase in the number of branch pipes imposes a limitation on compacting.

### SUMMARY OF THE INVENTION

The main object of the present invention is to provide an intake manifold free of the foregoing problems.

To comply with this object, the present invention provides an intake manifold being characterized in that at least one of the branch pipes is collapsed at a lengthwise intermediate portion to a flat form over a predetermined length, the cross sectional area of the collapsed portion being approximately equal to the cross sectional area of the remaining circular portion of the branch pipes.

With the intake manifold of the present invention, at least one of the branch pipes is deformed at a lengthwise intermediate portion thereof, and the outer peripheral surface of the deformed portion has a clearance area so as to be free from contact with another branch pipe. Accordingly, the branch pipes can be arranged as desired without permitting interference therebetween. This makes it possible to arrange an increased number of branch pipes in a small space and therefore to provide a compacted manifold in conformity with the size of engine rooms of motor vehicles or the like.

In cross section, the inner periphery of the deformed portion having the clearance area on its outer periphery is in the form of a closed curve having no straight portion, and the deformed portion is approximately equal to the other portion in cross sectional area. The deformed portion therefore achieves the same intake efficiency as the circular portion, permitting the manifold to exhibit high performance despite the compacted construction. Further when the roughness of the inner surface of each branch pipe is up to 10 µm, preferably up to 5 µm, more preferably up to 1 µm, in terms of center line average height, the internal resistance to the flow of air is small to ensure an improved intake efficiency. Consequently, when mounted on an engine, the intake manifold permits the engine to exhibit improved performance in respect of output and torque.

The present invention will be described in greater detail with reference to the accompanying drawings.

### BRIEF DESCRIPTION OF THE DRAWINGS

FIG. 1 is a perspective view showing an intake manifold embodying the invention;
FIG. 2 is a plan view partly broken away and showing the manifold;
FIG. 3 is a side elevation of the same;
FIG. 4 is a rear view partly broken away and showing the same;
FIG. 5 is a perspective view showing a central branch pipe;
FIG. 6 is an enlarged view in section taken along the line VI-VI in FIG. 5;
FIG. 7 is an enlarged view in section taken along the line VII-VII in FIG. 5;
FIG. 8 is an enlarged view in section taken along the line VIII-VIII in FIG. 5;
FIG. 9 is a sectional view showing the relation between the central branch pipe and a right or left branch pipe;
FIG. 10 is a perspective view showing stepwise a process for preparing the central branch pipe; and
FIG. 11 is a perspective view showing a die for use in preparing the central branch pipe.

### DESCRIPTION OF THE PREFERRED EMBODIMENTS

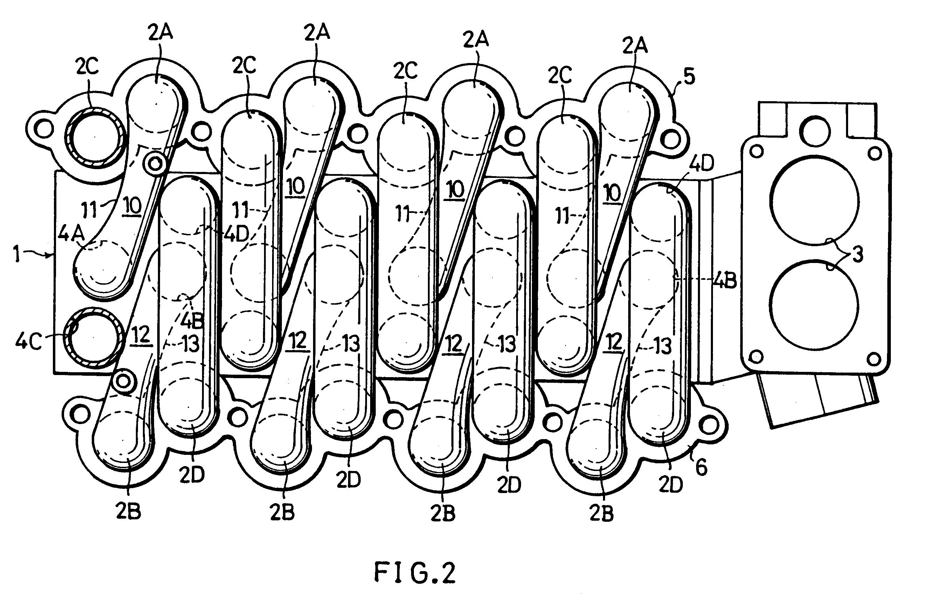

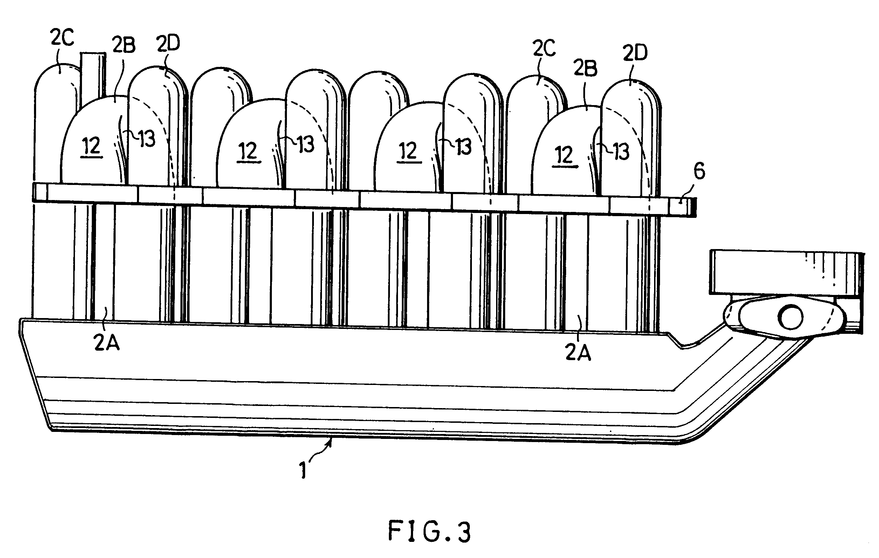

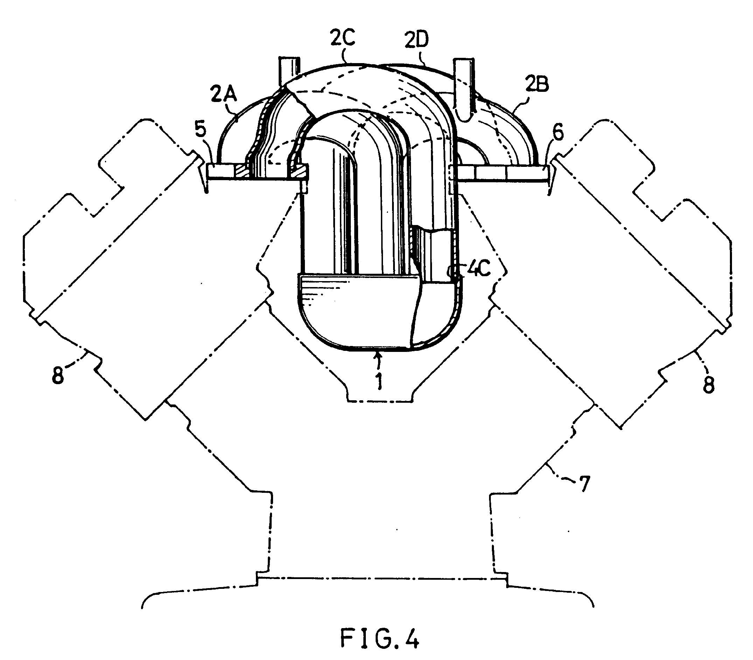

In the following description, the right-hand side of FIG. 2 will be referred to as "front," the left-hand side thereof as "rear," the upper side thereof as "left," and the lower side thereof as "right." The terms "upper" and "lower" are used as the embodiment is seen as illustrated in FIGS. 3 and 4.

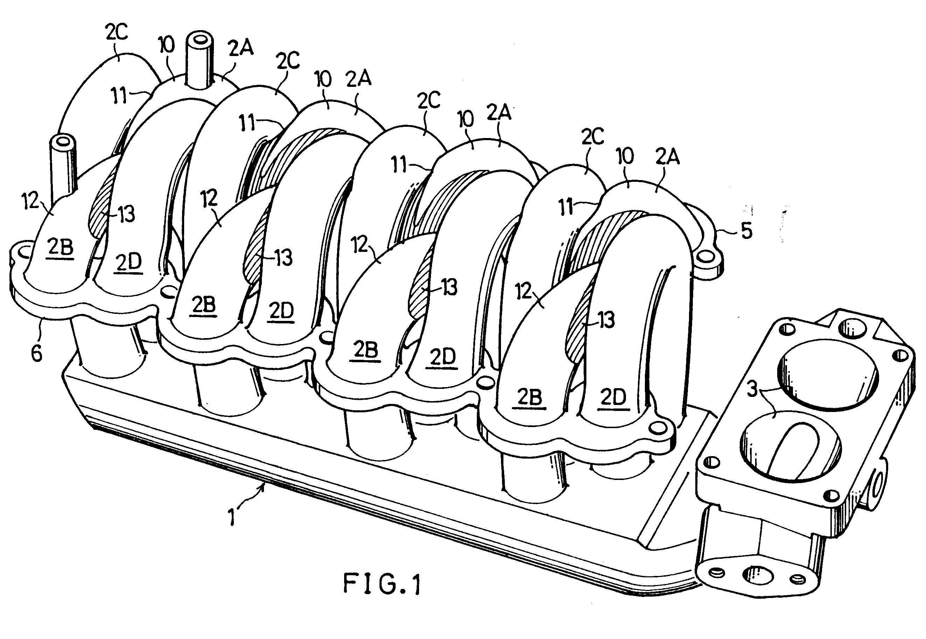

FIGS. 1 to 4 show an intake manifold embodying the invention and adapted for use with motor vehicle engines having V-type eight cylinders each having two intake ports and two exhaust ports. With reference to these drawings, the intake manifold comprises a hollow plenum chamber 1 made of wrought aluminum or cast aluminum, and 16 branch pipes 2A, 2B, 2C and 2D of wrought aluminum connected to the plenum chamber 1.

The plenum chamber 1 has at its front end portion two air inlets 3. An air supply duct (not shown) extending from an air cleaner is connected to each air inlet 3. The upper wall of the plenum chamber 1 is formed in the widthwise central portion thereof with eight central air outlets 4A and 4B arranged in the front-to-rear direction at a predetermined spacing. Four right air outlets 4C are formed in the upper wall at the right side of the respective even-numbered four central air outlets 4A (first central air outlets) as the eight air outlets 4A, 4B are numbered from the front. Four left air outlets 4D are formed at the left side of the respective odd-numbered four central air outlets 4B (second central air outlets). Branch pipes 2A to 2D, generally inverted J-shaped when seen from the front, are connected to all the air outlets 4A to 4D, respectively. Each branch pipe 2A (first central branch pipe) connected to the first central air outlet 4A and each branch pipe 2C (right branch pipe) connected to the right air outlet 4C are connected at their forward ends to a flange 5 disposed at the left side of the plenum chamber 1 for connection to a cylinder head. Each branch pipe 2B (second central branch pipe) connected to the second central air outlet 4B and each branch pipe 2D (left branch pipe) connected to the left air outlet 4D are connected at their forward ends to a flange 6 disposed at the right side of the plenum chamber 1 for connection to a cylinder head. As seen in FIG. 4, the flanges 5, 6 are attached to the cylinder heads 8 of a V-type 8-cylindered engine 7. Each pair of adjacent first central branch pipe 2A and right branch pipe 2C, as well as each pair of adjacent second central branch pipe 2B and left branch pipe 2D, is connected to the intake ports of one of the cylinders of the engine 7.

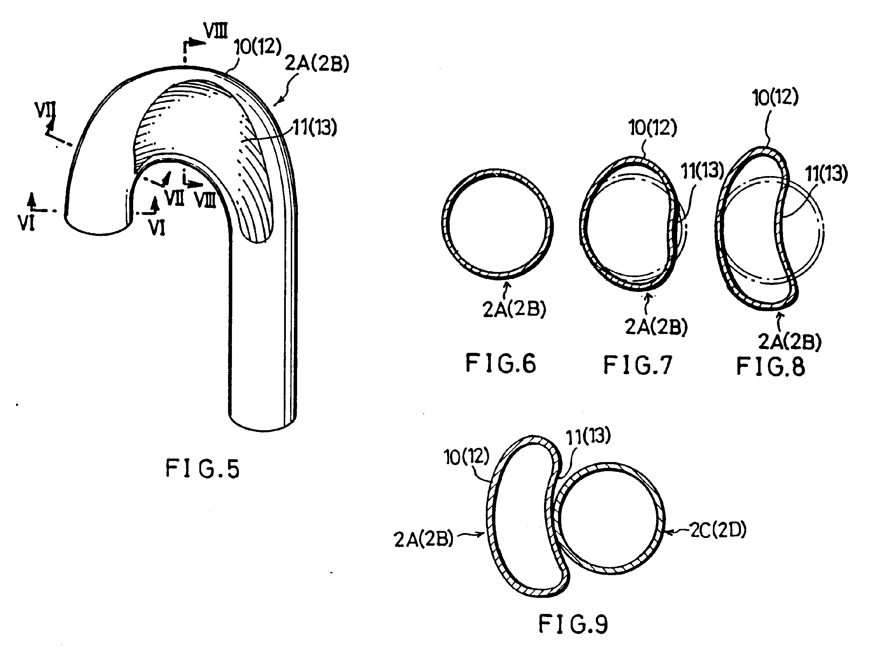

Each of the branch pipes 2A to 2D is prepared from a tubular material having a circular cross section and made, for example, of an aluminum extrudate. The roughness of the inner surface of the branch pipe is up to 10 µm, preferably up to 5 µm, more preferably up to µm, in terms of center line average height. The first central branch pipe 2A extends from under the right branch pipe 2C obliquely leftwardly forward and is deformed as at 10 at a lengthwise intermediate portion thereof. The outer peripheral surface of the deformed portion 10 has a clearance area 11 so as to be free from contact with the right branch pipe 2C. The second central branch pipe 2B has the same shape as the first central branch pipe 2A, extends from under the left branch pipe 2D obliquely rightwardly rearward and is deformed as at 12 at a lengthwise intermediate portion thereof. The outer peripheral surface of the deformed portion 12 has a clearance area 13 so as to be free from contact with the left branch pipe 2D. FIG. 5 shows the central branch pipe 2A (2B). The pipe 2A (2B) has the deformed portion 10 (12) at a bend. In cross section, the inner peripheral surface of the central branch pipe 2A (2B) is circular over a specified length toward the flange 5 (6) and over a specified length toward the air outlet 4A (4B) (see FIG. 6). The cross sectional contour of the inner peripheral surface of the deformed portion 10 (12) is in the form of a closed curve having no straight portion. The clearance area 11 (13) gradually enlarges from opposite ends of the deformed portion 10 (12) toward the midpoint of length thereof (see FIGS. 7 and 8). The cross sectional area of the deformed portion 10 (12) is approximately equal to that of the circular portion. As shown in FIG. 9, the clearance area 11 (13) of the central branch pipe 2A (2B) serves to hold the pipe 2A (2B) out of contact with the right branch pipe 2C (the left branch pipe 2D). The clearance between the clearance area 11 (13) of the central branch pipe 2A (2B) and the right branch pipe 2C (the left branch pipe 2D) is at least 0.5 mm.

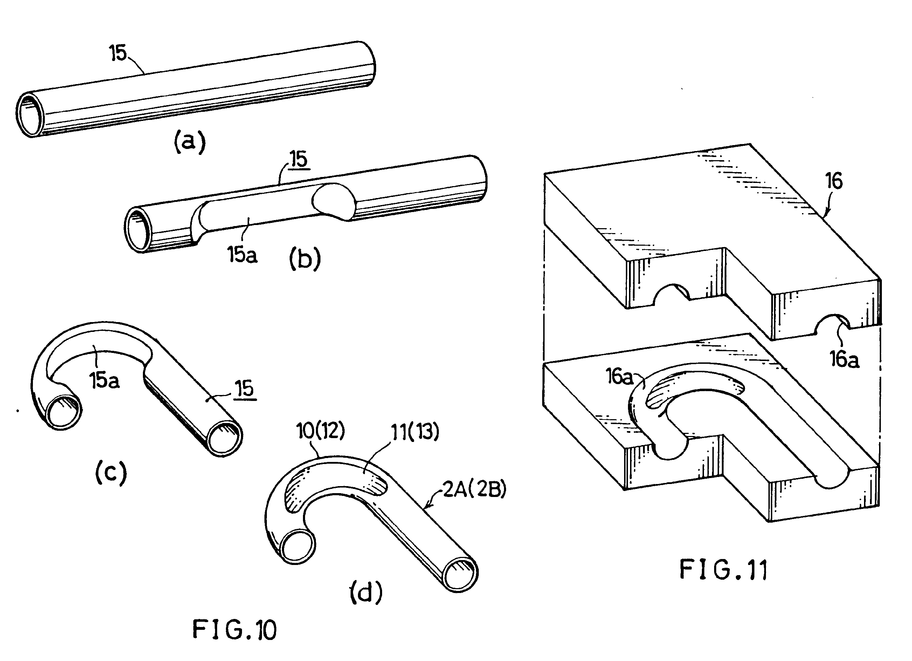

The central branch pipe 2A (2B) is prepared, for example, by the process shown in FIGS. 10 and 11. For the preparation of the pipe 2A (2B), a tubular material 15 is first prepared which is circular in cross section and made of an aluminum extrudate (see FIG. 10, (a)). A lengthwise intermediate portion of the material is collapsed to a flat form over a predetermined length (see FIG. 10, (b)). Next, the tubular material 15 is bent at the collapsed portion 15a to a J-form widthwise of the collapsed portion 15a (see FIG. 10, (c)). The J-shaped material 15 is thereafter placed into a die 16 which, as shown in FIG. 11, has cavities 16a shaped in conformity with the external configuration of the central branch pipe 2A (2B) having the deformed portion 10 (12). Subsequently, the material 15 is bulged by internally applying a liquid pressure or pneumatic pressure to the material 15. In this way, the central branch pipe 2A (2B) is formed as seen in FIG. 10, (d).

According to the embodiment described above, the right branch pipe 2C and the left branch pipe 2D are circular in cross section over the entire length thereof, and the central branch pipe 2A (2B) only is formed with the clearance portion 11 (13), whereas the central branch pipe 2A (2B) and the right branch pipe 2C (left branch pipe 2D) may each be formed with a clearance portion so as to be out of contact with each other.

## Claims

1. Intake manifold comprising an aluminum plenum chamber having an air inlet and a plurality of air outlets, a plurality of branch pipes of wrought aluminum being connected to the air outlets of the plenum chamber each having an inner peripheral surface of circular cross section, the branch pipes being free from contact with another one of the branch pipes, **characterized** in that at least one of the branch pipes (2A,2B,2C,2D) is collapsed at a lengthwise intermediate portion to a flat form over a predetermined length, the cross sectional area of the collapsed portion being approximately equal to the cross sectional area of the remaining circular portion of the branch pipes.

2. Intake manifold as claimed in claim 1, **characterized** in that the cross sectional contour of the inner peripheral surface of the collapsed potion (11, 13) is in the form of a closed curve having not straight portion.

3. Intake manifold as claimed in claim 1, **characterized** in that the surface roughness of the inner surface of each branch pipe is up to 10 µm of the center line average height.

4. Intake manifold as claimed in claim 1, **characterized** in that the surface roughness of the inner surface of each branch pipe (2A,2B,2C,2D) is up to 5 µm in the center line average height.

5. Intake manifold is claimed in claim 1, **characterized** in that the surface roughness of the inner surface of each branch pipe (2A,2B,2C,2D) is up to 1 µm in the center line average height.

6. Intake manifold as claimed in claim 1, **characterized** in that the clearance between the clearance area of the collapsed portion (11,13) and another one of the branch pipes ist at least 0,5 mm.

## Patentansprüche

1. Ansaugkrümmer mit einem Aluminium-Vorkammerrohr mit einem Lufteinlaß und einer Anzahl von Luftauslässen, einer Anzahl von Zweigrohren aus verformtem Aluminium, die mit den Luftauslässen des Vorkammerrohres verbunden sind und jeweils eine innere Umfangsfläche mit kreisförmigem Querschnitt aufweisen, welche Zweigrohre nicht mit einem der anderen Zweigrohre in Berührung stehen, dadurch **gekennzeichnet,** daß wenigstens eines der Zweigrohre (2A,2B,2C,2D) im Längsmittelbereich zu einer flachen Form über eine vorgegebene Länge zusammengedrückt ist, und daß der Querschnitt des zusammengedrückten Bereichs etwa die gleiche Querschnittsfläche wie der verbleibende kreisförmige Bereich der Zweigrohre aufweist.

2. Ansaugkrümmer nach Anspruch 1, dadurch **gekennzeichnet**, daß die Querschnittskontur der inneren Umfangsfläche des zuammengedrückten Bereichs (11, 13) die Form einer geschlossenen Kurve ohne geraden Bereich aufweist.

3. Ansaugkrümmer nach Anspruch 1, dadurch **gekennzeichnet**, daß die Oberflächenrauhigkeit der inneren Oberfläche jedes Zweigrohres bis zu 10 µm der Mittellinien-Durchschnittshöhe aufweist.

4. Ansaugkrümmer nach Anspruch 1, dadurch **gekennzeichnet**, daß die Oberflächenrauhigkeit der inneren Oberfläche jedes Zweigrohres (2A,2B,2C, 2D) bis zu 5 µm der Mittellinien-Durchschnittshöhe aufweist.

5. Ansaugkrümmer nach Anspruch 1, dadurch **gekennzeichnet**, daß die Oberflächenrauhigkeit der inneren Oberfläche jedes Zweigrohres (2A,2B,2C, 2D) bis zu 1 µm der Mittellinien-Durchschnittshöhe aufweist.

6. Ansaugkrümmer nach Anspruch 1, dadurch **gekennzeichnet**, daß der Abstand zwischen dem Abstandsbereich des zusammengedrückten Bereichs (11, 13) und einem der anderen Zweigrohre wenigstens 0,5 mm beträgt.

## Revendications

1. Collecteur d'admission comprenant une chambre de tranquillisation en aluminium ayant une entrée d'air et une multiplicité de sorties d'air, une multiplicité de tuyaux de distribution en aluminium façonné étant reliés aux sorties d'air de la chambre de tranquillisation, chacun d'entre eux présentant une surface périphérique interne de section transversale circulaire, les tuyaux de distribution n'étant pas en contact les uns avec les autres, caractérisée en ce qu'au moins un des tuyaux de distribution (2A, 2B, 2C, 2D) est aplati au niveau d'une partie intermédiaire dans le sens de la longueur pour constituer une forme plate s'étendant sur une longueur prédéterminée, la superficie de la section transversale de la partie aplatie étant à peu près égale à la superficie de la section transversale de la partie circulaire restante des tuyaux de distribution.

2. Collecteur d'admission selon la revendication 1, caractérisée en ce que le contour de la section transversale de la surface périphérique interne de la partie aplatie (11, 13) se présente sous la forme d'une courbe fermée sans partie droite.

3. Collecteur d'admission selon la revendication 1, caractérisée en ce que la rugosité de la surface interne de chaque tuyau de distribution représente jusqu'à 10µm en termes de hauteur moyenne par rapport à la ligne médiane.

4. Collecteur d'admission selon la revendication 1, caractérisée en ce la rugosité de la surface interne de chaque tuyau de distribution (2A, 2B, 2C, 2D) représente jusqu'à 5µm en termes de hauteur moyenne par rapport à la ligne médiane.

5. Collecteur d'admission selon la revendication 1, caractérisée en ce que la rugosité de la surface interne de chaque tuyau de distribution (2A, 2B, 2C, 2D) représente jusqu'à 1µm en termes de hauteur moyenne par rapport à la ligne médiane.

6. Collecteur d'admission selon la revendication 1, caractérisée en ce que le jour entre la zone de jour de la partie aplatie (11, 13) et un autre tuyau de distribution est d'au moins 0,5 mm.
